(19) Europäisches Patentamt
European Patent Office
Office européen des brevets

(11) **EP 2 871 754 A1**

(12) **EUROPÄISCHE PATENTANMELDUNG**

(43) Veröffentlichungstag:
**13.05.2015 Patentblatt 2015/20**

(51) Int Cl.:
***H02K 3/04*** *(2006.01)*

(21) Anmeldenummer: **13192468.0**

(22) Anmeldetag: **12.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Gertz, Simon**
**40229 Düsseldorf (DE)**
• **Kowalski, Matthias**
**45470 Mülheim an der Ruhr (DE)**

(54) **Elektromaschine**

(57) Die vorliegende Erfindung betrifft eine Elektromaschine (10) mit einem Läufer (11) und einem Ständer (12). Der Läufer (11) ist im Ständer (12) um eine Rotationsachse (27) drehbar angeordnet. Innerhalb des Ständers (12) ist eine mehrere Stäbe (16) umfassende Ständerwicklung (13) angeordnet, die einen längs zur Rotationsachse (27) von einer Eingangsstelle (23) bis zu einer Ausgangsstelle (24) verlaufenden Aktivteil (19) aufweist. Die Stäbe (16) sind an der Eingangsstelle (23) jeweils in einer Eingangsposition (14) in den Aktivteil (19) hineingeführt und an der Ausgangsstelle (24) jeweils an einer Ausgangsposition (15) aus dem Aktivteil (19) herausgeführt. Die Stäbe (16) weisen innerhalb des Aktivteils (19) jeweils einen Verlauf mit einem konstanten Abstand radial zur Rotationsachse (27) auf. Der Verlauf ist an jeder Stelle durch zwei Richtungskomponenten bestimmt, einer Längskomponente, die parallel zur Rotationsachse (27) gerichtet ist, und einer Umfangskomponente, die in Umfangsrichtung gerichtet ist. Erfindungsgemäß umfasst der Aktivteil (19) einen Eingangsteil (21) und einen Parallelteil (20) und einen Ausgangsteil (22). Der Verlauf weist dabei im Parallelteil (20) an jeder Stelle eine größere Längskomponente als Umfangskomponente und in dem Eingangsteil (21) sowie in dem Ausgangsteil (22) größere Umfangskomponenten als im Parallelteil (20) auf.

FIG 1

**Beschreibung**

Die vorliegende Erfindung betrifft eine Elektromaschine, insbesondere einen Turbogenerator.

Im Stand der Technik sind Turbogeneratoren bekannt, deren Stäbe im Aktivteil an einer tangentialen Position verlaufen. Einzelne Wicklungen sind dabei mit einem Wickelkopf geschlossen. In diesem Wickelkopf wird durch Biegung der Stäbe die tangentiale Distanz überbrückt und die Leiter der Oberlage werden mit den Leitern der Unterlage verbunden.

Diese Konstruktion erfordert relativ viel Bauraum an beiden Enden der Maschine. Der Wickelkopf muss sowohl thermisch auf die auftretenden Verluste ausgelegt werden, als auch mechanisch allen möglichen Fehlerfällen standhalten können.

Bei kleineren Elektromaschinen kommt im Stand der Technik eine Helixwicklung zum Einsatz, bei der sich die tangentiale Position des Stabs linear mit der axialen Position ändert, sodass die tangentiale Distanz zwischen zwei zu verbindenden Stäben bereits im Aktivteil überwunden wird.

Dieses Design bringt jedoch einige Nachteile mit sich. Durch die Schrägung des Stabs wird die zwischen zwei Stäben aufgespannte Fläche deutlich geringer. Dies führt dazu, das die induzierte Spannung der Maschine abnimmt. Um die gleiche Spannung wie ein herkömmlicher Turbogenerator zu liefern muss bei der Helixwicklung folglich die Länge des Aktivteils erhöht werden.

Da die Helixwicklung nicht wie bisher in Nuten gelegt werden kann, sondern als sogenannte Luftspaltwicklung ausgeführt wird, treten sehr hohe Wirbelstromverluste im Kupfer der Stäbe auf, welche durch die Radialkomponente des Feldes verursacht werden. Um die Verbindung zwischen Ober- und Unterlage der Wicklung herzustellen muss der Stab am Ende der Maschine abgeknickt werden.

Der vorliegenden Erfindung liegt die Aufgabe zugrunde, eine verbesserte Elektromaschine mit einer verbesserten Ständerwicklung bereitzustellen.

Gelöst wird diese Aufgabe mit einer Elektromaschine nach Anspruch 1. Vorteilhafte Weiterbildungen der Erfindung sind in den Unteransprüchen angegeben und in der Beschreibung beschrieben.

Die erfindungsgemäße Elektromaschine umfasst einen Läufer und einen Ständer. Der Läufer ist im Ständer um eine Rotationsachse drehbar angeordnet. Innerhalb des Ständers ist eine mehrere Stäbe umfassende Ständerwicklung angeordnet, die einen längs zur Rotationsachse von einer Eingangsstelle bis zu einer Ausgangsstelle verlaufenden Aktivteil aufweist. Die Stäbe sind an der Eingangsstelle jeweils in einer Eingangsposition in den Aktivteil hineingeführt und an der Ausgangsstelle jeweils an einer Ausgangsposition aus dem Aktivteil herausgeführt. Die Stäbe weisen innerhalb des Aktivteils jeweils einen Verlauf mit einem konstanten Abstand radial zur Rotationsachse auf. Der Verlauf ist an jeder Stelle durch zwei Richtungskomponenten bestimmt, einer Längskomponente, die parallel zur Rotationsachse gerichtet ist, und einer Umfangskomponente, die in Umfangsrichtung gerichtet ist. Erfindungsgemäß umfasst der Aktivteil einen Eingangsteil und einen Parallelteil und einen Ausgangsteil. Der Verlauf weist dabei im Parallelteil an jeder Stelle eine größere Längskomponente als Umfangskomponente und in dem Eingangsteil sowie dem Ausgangsteil größere Umfangskomponenten als im Parallelteil auf.

Der Vorteil dieser Anordnung liegt darin, dass die von der Ständerwicklung aufgespannte Fläche wesentlich vergrößert wird und somit die Elektromaschine bei gleicher Spannung kürzer ausgelegt werden kann oder bei gleicher Maschinenlänge höhere Spannungen möglich sind.

Proportional zu einer Abnahme der Maschinenlänge nimmt auch die Länge der einzelnen Stäbe ab. Die Reduzierung der Maschinenlänge führt zu Materialeinsparungen, insbesondere der Kupfermenge für die Stäbe und der Eisenmenge für den Ständer. Das trägt zur Kostenreduktion bei.

Mit einer Reduzierung der Stablänge nehmen sowohl Gleichstromverluste, wie auch Radialfeldverluste ab. Dies führt bei gleichbleibender Leistung zu einer Erhöhung des Wirkungsgrades.

In einer vorteilhaften Ausgestaltung der erfindungsgemäßen Elektromaschine verlaufen die Stäbe jeweils an der Eingangsstelle und an der Ausgangsstelle gerade. Das heißt, die Stäbe weisen an dieser Stelle keine Winkeländerung auf.

Dadurch ist die Fertigung und Montage der Scheitelverbindungen vereinfacht. Eine Montage der Scheitelverbindung innerhalb oder sehr nahe am Aktivteil ist möglich. Dies führt dazu, dass der benötigte Bauraum weiter verringert werden kann.

In einer weiteren vorteilhaften Ausgestaltung der erfindungsgemäßen Elektromaschine ist der Parallelteil wenigstens gleich lang wie der Eingangsteil und der Ausgangsteil zusammen lang sind.

Damit ist ein möglichst langer Verlauf des Stabs entlang einer tangentialen Position erreicht, wodurch die von der Ständerwicklung aufgespannte Fläche vergrößert ist.

In einer weiteren vorteilhaften Ausgestaltung der erfindungsgemäßen Elektromaschine sind jeweils die Eingangsposition und die Ausgangsposition der Stäbe bezüglich der Rotationsache sich gegenüberliegend angeordnet.

Dadurch wird die Länge der Verbindung zwischen zwei Stäben einer Windung minimal. Der Wickelkopf kann dadurch möglichst kurz ausgeführt werden.

Der Verlauf der Stäbe kann erfindungsgemäß durch ein Polynom definiert sein. In einer weiteren vorteilhaften Ausgestaltung der erfindungsgemäßen Elektromaschine entspricht der Verlauf der Stäbe jeweils dem Polynom

$$\alpha(z) = \frac{\pi}{2} * \left[ 0{,}1\left(s(z)\right)^3 + 3{,}3\left(s(z)\right)^5 - 2{,}4\left(s(z)\right)^7 \right] + \alpha_0,$$

mit einer Hilfsvariablen $s(z) = \frac{2}{l} * z - 1$. Dabei ist l die Länge des Aktivteils (19), z die Stelle bezüglich der Rotationsachse, $\alpha_0$ ein für jeden Stab individueller Offsetwinkel und $\alpha(z)$ ein Winkel zwischen der Rotationsachse und dem Stab. Polynome höherer Ordnung sind erfindungsgemäß ebenfalls möglich, einschränkend ist hier nur die Fertigung der Stäbe, welche die Biegungsradien vorgibt.

Dieses Polynom erfüllt die Bedingungen, jedem Stab eine Position zuzuordnen, ein möglichst paralleles Auslaufen der Stäbe aus dem Aktivteil bezüglich der Rotationsachse zu ermöglichen, den Parallelteil in seiner Länge zu maximieren und kein Überschwingen zu erzeugen. Das Polynom beschreibt damit einen ziemlich idealen Verlauf.

In einer vorteilhaften Ausgestaltung der erfindungsgemäßen Elektromaschine ist jeweils der Verlauf der Stäbe im Parallelteil parallel zur Rotationsachse ausgebildet.

Erzielt kann diese Vorgabe an den Verlauf der Stäbe beispielsweise unter Verwendung von Stützstellen und dem Anwenden von Splinefunktionen.

In einer weiteren vorteilhaften Ausgestaltung der erfindungsgemäßen Elektromaschine umfasst die Ständerwicklung zwei Lagen von Stäben.

Damit kann der grundsätzliche Aufbau aus Oberlage und Unterlage auch bei der erfindungsgemäßen Elektromaschine Anwendung finden.

In einer weiteren vorteilhaften Ausgestaltung ist die Elektromaschine ein Turbogenerator.

Damit kommen die erfindungsgemäßen Vorteile der Elektromaschine dem Turbogenerator zugute.

Ausführungsbeispiele der Erfindung werden anhand der Zeichnungen und der nachfolgenden Beschreibung näher erläutert. Es zeigen:

Figur 1    eine erfindungsgemäße Elektromaschine,

Figur 2    eine Ständerwicklung der Elektromaschine,

Figur 3    eine Zeichenerläuterung,

Figur 4    Details der Ständerwicklung und.

Figur 5    eine Kurvenvorgabe für den Verlauf eines Stabs.

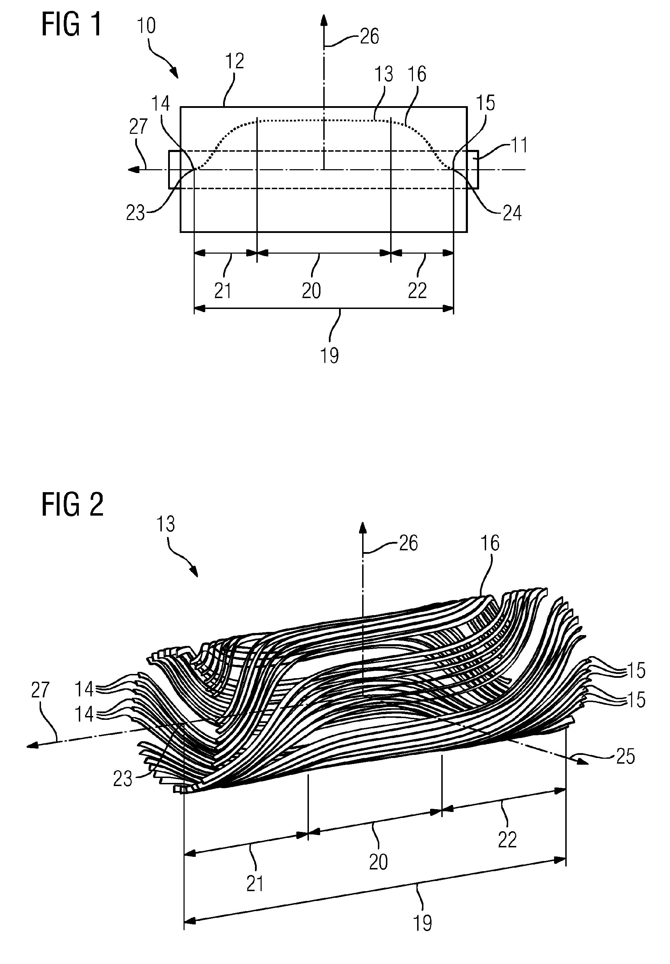

In der Figur 1 ist eine erfindungsgemäße Elektromaschine 10 in einer beispielhaften Ausgestaltung dargestellt. Die Elektromaschine 10 ist insbesondere ein Turbogenerator 10, der zur Stromerzeugung von einer Gasturbine oder einer Dampfturbine oder einer anderen Antriebsmaschine angetrieben werden kann.

Die erfindungsgemäße Elektromaschine 10 weist einen Läufer 11 und einen Ständer 12 auf. Der Ständer 12 umfasst insbesondere ein Blechpaket. Der Läufer 11 ist, wie es üblich ist, im Ständer 12 angeordnet und ist um eine Rotationsachse 27 drehbar gelagert. Neben der Rotationsachse 27 sind in den Figuren zur Veranschaulichung eine Hochachse 26 und eine Querachse 25 dargestellt.

Innerhalb des Ständers 12 ist erfindungsgemäß eine Ständerwicklung 13 angeordnet. Die Ständerwicklung umfasst mehrere Stäbe 16. In der Figur 1 ist zur Veranschaulichung lediglich ein Stab 16 der Ständerwicklung 13 beispielhaft dargestellt.

Die Ständerwicklung 13 ist gemäß der Erfindung längs der Rotationsachse 27 in mehrere Abschnitte unterteilt. Dabei sind innerhalb eines Aktivteils 19 ein Eingangsteil 21, ein Parallelteil 20, und ein Ausgangsteil 22 angeordnet. Der Eingangsteil 21 ist dabei an einem Ende des Aktivteils 19 und der Ausgangsteil 22 am anderen Ende des Aktivteils 19 angeordnet. Der Parallelteil 20 ist der Teil zwischen dem Eingangsteil und dem Ausgangsteil 22. Der Aktivteil 19 der Ständerwicklung 16 ist innerhalb eines Raums in Form einer kreiszylindrischen, geraden Röhre angeordnet.

Der Aktivteil 19 reicht erfindungsgemäß längs der Rotationsachse 27 von einer Eingangsstelle 23 bis zu einer Ausgangsstelle 24. Der Aktivteil 19 ist für die im Betrieb der Elektromaschine 10 als Generator indizierte Spannung maßgeblich. Der Aktivteil 19 ist der magnetisch aktive Teil des Ständers 12. Die Länge des Aktivteils 19 entspricht der Länge des Blechpakets.

Die Stäbe 16 sind erfindungsgemäß an der Eingangsstelle 23 jeweils in einer Eingangsposition 14 in den Aktivteil 19 hineingeführt und an der Ausgangsstelle 24 jeweils an einer Ausgangsposition 15 aus dem Aktivteil 19 herausgeführt. Insbesondere verlaufen die Stäbe 16 an der Eingangsstelle 23 und an der Ausgangsstelle 24 gerade und weisen eine Winkeländerung von Null auf.

Die Stäbe 16 weisen innerhalb des Aktivteils 19 jeweils einen Verlauf mit einem konstanten Abstand radial zur Rotationsachse 27 auf. An jeder Stelle der Rotationsachse 27 ist der radiale Abstand zum Stab 16 also gleich groß. Erfindungsgemäß ist der Verlauf des Stabs 16 jeweils an jeder Stelle durch zwei Richtungskomponenten bestimmt, einer Längskomponente und einer Umfangskomponente. Die Längskomponente ist parallel zur Rotationsachse 27 gerichtet und die Umfangskomponente ist in Umfangsrichtung um die Rotationsachse 27 herum gerichtet.

Die verschiedenen Teile 20, 21, 22 des Aktivteils 19 sind durch die Verläufe der Stäbe 13 definiert. Der Parallelteil 20 ist erfindungsgemäß als der zusammenhängende Abschnitt zwischen dem Eingangsteil 21 und dem Ausgangsteil 22 definiert, der an jeder Stelle eine größere Längskomponente als Umfangskomponente aufweist. Zudem weist der Verlauf erfindungsgemäß in dem Eingangsteil 21 sowie in dem Ausgangsteil 22 größere Umfangskomponenten als im Parallelteil 20 auf. Der Parallelteil 20 weist insbesondere eine Länge auf, die mindestens der Summe der Länge des Eingangsteils 21 und der Länge des Ausgangsteils 22 entspricht.

Es ist erfindungsgemäß nicht ausgeschlossen, dass die Ständerwicklung neben den hier beschriebenen Stäben 16 weitere anders verlaufende Stäbe aufweist.

Die Ständerwicklung 13 der erfindungsgemäßen Elektromaschine 10 ist in einer beispielhaften Ausgestaltung in der Figur 2 dargestellt. In der gezeigten Abbildung sind 36 Stäbe dargestellt. Jeweils 12 gehören hierbei zu einem Strang. Die Ständerwicklung 13 umfasst hier drei Stränge.

Die 36 Stäbe weisen hier 36 Eingangspositionen 14 und 36 Ausgangspositionen auf. In einer Projektion auf eine sich parallel der Querachse 25 und der Hochachse 26 aufspannenden Ebene liegen alle Eingangspositionen 14 und alle Ausgangspositionen 15 auf einer Kreisbahn. Alle Eingangspositionen 14 sind an der Eingangsstelle 23 der Rotationsachse 27 angeordnet und alle Ausgangspositionen 15 sind an der Ausgangsstelle 24 der Rotationsachse 27 angeordnet.

In der gezeigten Abbildung ist lediglich eine Lage der Ständerwicklung 13 gezeigt. Die Ständerwicklung 13 umfasst insbesondere zwei Lagen der Stäbe 16, eine Oberlage und eine Unterlage. Dabei liegen jeweils zwei Stäbe 16 übereinander. Die Verbindung der Stäbe 16 eines Strangs erfolgt außerhalb des Aktivteils 19 in einem nichtgezeigten Wickelkopf.

In der gezeigten Ausgestaltung weisen die Stäbe 16 jeweils einen Verlauf auf, der im Eingangsteil 21 und im Ausgangsteil 22 einem auf einen Umfang eines Kreiszylinders gelegten S entspricht. Dabei sind sich jeweils die Eingangsposition 14 und die Ausgangsposition 15 der Stäbe 16 bezüglich der Rotationsache 27 gegenüberliegend angeordnet.

In der gezeigten Ausgestaltung der Ständerwicklung 13 können die Verläufe der Stäbe mit dem folgenden Polynom beschrieben werden.

$$\alpha(z) = \frac{\pi}{2} * \left[ 0{,}1\left(s(z)\right)^3 + 3{,}3\left(s(z)\right)^5 - 2{,}4\left(s(z)\right)^7 \right] + \alpha_0$$

Dabei ist die Hilfsvariable

$$s(z) = \frac{2}{l} * z - 1$$

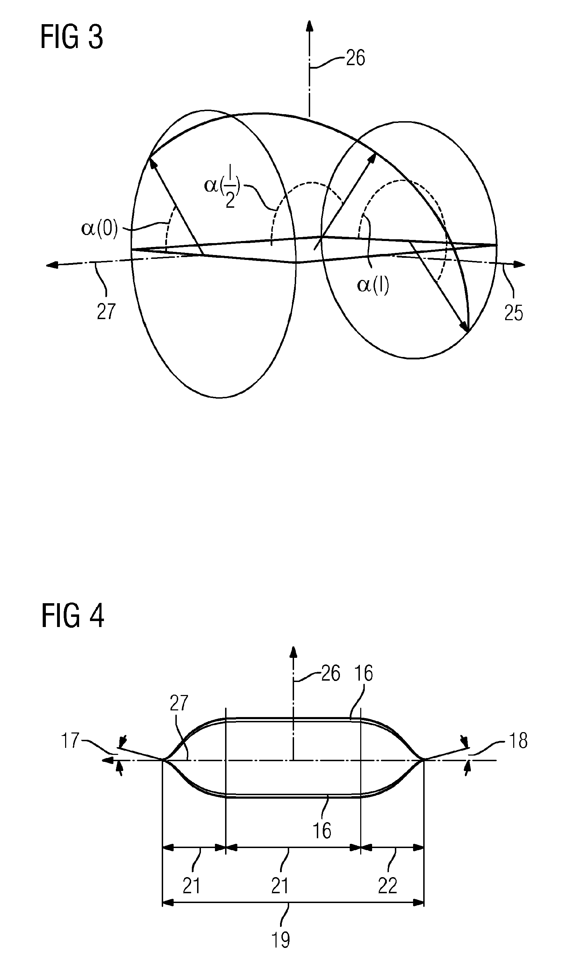

Dabei ist l die Länge des Aktivteils (19), z ist die Stelle bezüglich der Rotationsachse (27), $\alpha 0$ ist ein für jeden Stab individueller Offsetwinkel und $\alpha(z)$ ist ein Winkel zwischen der Rotationsachse (27) und dem Stab (16). In der Figur 3 sind die Bezeichnungen visualisiert.

Bei diesem Polynom ist Winkeländerung am Maschinenaustritt gleich Null. Der Stab 16 tritt gerade aus dem Aktivteil 19 aus. Ein Eingangswinkel 17 und ein Ausgangswinkel 18 der beiden Stäbe bezogen auf die Rotationsachse 27 sind jeweils gleich groß. Insbesondere können der Eingangswinkel 17 und der Ausgangswinkel gleich Null sein. In der Weise ist es in der Figur 4 in einer Projektion auf eine Ebene parallel zur Querachse 27 und zur Hochachse 26 gezeigt. Mit diesem Polynom ist zudem die Position der Stäbe 16 im mittleren Bereich der Elektromaschine 10 so angepasst, dass die aufgespannte Fläche maximal wird.

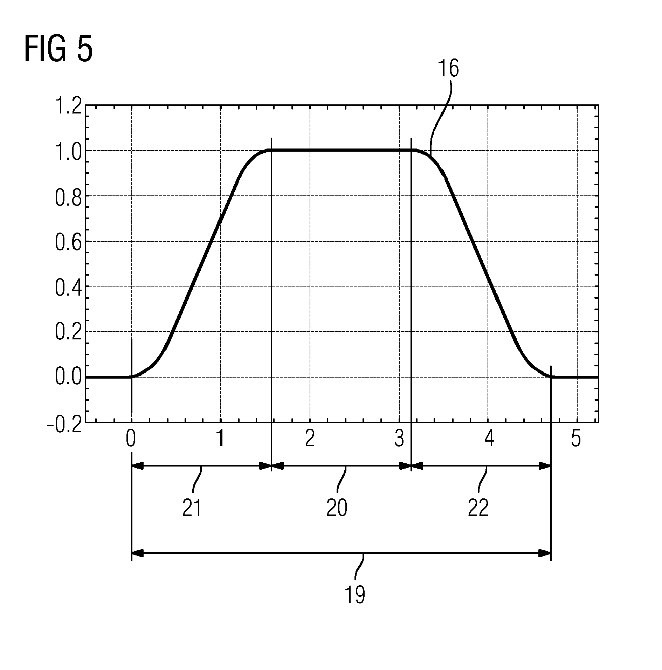

In der Figur 5 ist eine weitere Alternative zur Vorgabe für den Verlauf der Stäbe 16 dargestellt. Unter Verwendung von Stützstellen und dem Anwenden von Splinefunktionen wird der Verlauf der Stäbe 16 erzeugt. Splines verbinden dabei benachbarte Punkte mit je Funktionen dritter Ordnung, ohne die Stetigkeit der resultierenden Gesamtfunktion zu gefährden. Sie eignen sich erfindungsgemäß besonders gut, da sie absolut gerade Stabsektionen im Parallelteil 19 garantieren und trotzdem über die notwendige Flexibilität verfügen die Variation der Lage der Stützstellen im tangential veränderlichen Eingangsteil 21 und Ausgangsteil 22 des Stabs 16 zu beschreiben. Der Verlauf der Stäbe 16 ist hiermit im Parallelteil 20 parallel zur Rotationsachse 27 ausgebildet. Der Stab 16 ändert seine tangentiale Position im Parallelteil 19 hierbei nicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektromaschine (10) mit einem Läufer (11) und einem Ständer (12),
   wobei der Läufer (11) im Ständer (12) um eine Rotationsachse (27) drehbar angeordnet ist,
   wobei innerhalb des Ständers (12) eine mehrere Stäbe (16) umfassende Ständerwicklung (13) angeordnet ist, die einen längs zur Rotationsachse (27) von einer Eingangsstelle (23) bis zu einer Ausgangsstelle (24) verlaufenden Aktivteil (19) aufweist,
   wobei die Stäbe (16) an der Eingangsstelle (23) jeweils in einer Eingangsposition (14) in den Aktivteil (19) hineingeführt und an der Ausgangsstelle (24) jeweils an einer Ausgangsposition (15) aus dem Aktivteil (19) herausgeführt sind,
   wobei die Stäbe (16) innerhalb des Aktivteils (19) jeweils einen Verlauf mit einem konstanten Abstand radial zur Rotationsachse (27) aufweisen,
   wobei der Verlauf an jeder Stelle durch zwei Richtungskomponenten bestimmt ist, einer Längskomponente, die parallel zur Rotationsachse (27) gerichtet ist, und einer Umfangskomponente, die in Umfangsrichtung gerichtet ist,
   **dadurch gekennzeichnet, dass**
   der Aktivteil (19) einen Eingangsteil (21) und einen Parallelteil (20) und einen Ausgangsteil (22) aufweist,
   wobei der Verlauf im Parallelteil (20) an jeder Stelle eine größere Längskomponente als Umfangskomponente und in dem Eingangsteil (21) sowie in dem Ausgangsteil (22) größere Umfangskomponenten als im Parallelteil (20)aufweist.

2. Elektromaschine (10) nach Anspruch 1,
   wobei die Stäbe (16) jeweils an der Eingangsstelle (23) und an der Ausgangsstelle (24) gerade verlaufen.

3. Elektromaschine (10) nach Anspruch 1 oder 2,
   wobei der Parallelteil (20) wenigstens gleich lang ist wie der Eingangsteil (21) und der Ausgangsteil (22) zusammen lang sind.

4. Elektromaschine (10) nach einem der Ansprüche 1 bis 3, wobei jeweils die Eingangsposition (14) und die Ausgangsposition (15) der Stäbe (16) bezüglich der Rotationsache (27) sich gegenüberliegend angeordnet sind.

5. Elektromaschine (10) nach einem der Ansprüche 1 bis 4, wobei der Verlauf der Stäbe (16) jeweils dem Polynom

$$\alpha(z) = \frac{\pi}{2} * \left[ 0{,}1 \left( s(z) \right)^3 + 3{,}3 \left( s(z) \right)^5 - 2{,}4 \left( s(z) \right)^7 \right] + \alpha_0$$ entspricht, mit einer Hilfsvariablen

$$s(z) = \frac{2}{l} * z - 1,$$

wobei l die Länge des Aktivteils (19), z die Stelle bezüglich der Rotationsachse (27), $\alpha_0$ ein für jeden Stab individueller Offsetwinkel und $\alpha(z)$ ein Winkel zwischen der Rotationsachse (27) und dem Stab (16) ist.

6. Elektromaschine (10) nach einem der Ansprüche 1 bis 4, wobei jeweils der Verlauf der Stäbe (16) im Parallelteil (20) parallel zur Rotationsachse (27) ausgebildet ist.

7. Elektromaschine (10) nach einem der Ansprüche 1 bis 6, wobei die Ständerwicklung (13) zwei Lagen von Stäben (16) umfasst.

8. Elektromaschine (10) nach einem der Ansprüche 1 bis 7, wobei die Elektromaschine (10) ein Turbogenerator (10) ist.

FIG 1

FIG 2

FIG 3

FIG 4

FIG 5

**Europäisches Patentamt**
**European Patent Office**
**Office européen des brevets**

## EUROPÄISCHER RECHERCHENBERICHT

Nummer der Anmeldung

EP 13 19 2468

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 742 331 A1 (SIEMENS AG [DE]) 10. Januar 2007 (2007-01-10) <br> * Abbildung 2 * <br> * Anspruch 11 * <br> * Absätze [0009], [0028] * <br> ----- | 1-8 | INV. <br> H02K3/04 |

RECHERCHIERTE SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| Den Haag | 13. Juni 2014 | Stoffers, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
&......................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 13 19 2468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2014

| Im Recherchenbericht angeführtes Patentdokument | Datum der Veröffentlichung | Mitglied(er) der Patentfamilie | Datum der Veröffentlichung |
|---|---|---|---|
| EP 1742331 A1 | 10-01-2007 | KEINE | |

Für nähere Einzelheiten zu diesem Anhang : siehe Amtsblatt des Europäischen Patentamts, Nr.12/82